Europäisches Patentamt

European Patent Office

Office européen des brevets

(19)

(11) **EP 0 720 726 B1**

(12) **EUROPÄISCHE PATENTSCHRIFT**

(45) Veröffentlichungstag und Bekanntmachung des Hinweises auf die Patenterteilung:
**23.07.1997 Patentblatt 1997/30**

(21) Anmeldenummer: **94926794.2**

(22) Anmeldetag: **19.09.1994**

(51) Int Cl.6: **G01F 1/698**, F02D 41/18

(86) Internationale Anmeldenummer:
**PCT/DE94/01083**

(87) Internationale Veröffentlichungsnummer:
**WO 95/08753 (30.03.1995 Gazette 1995/14)**

(54) **VERFAHREN UND SCHALTUNGSANORDNUNG ZUM SCHUTZ EINES BEHEIZTEN TEMPERATURABHÄNGIGEN SENSORWIDERSTANDS VOR ÜBERHITZUNG**

PROCESS AND CIRCUIT FOR PROTECTING A HEATED TEMPERATURE-DEPENDENT SENSOR RESISTOR AGAINST OVERHEATING

PROCEDE ET CIRCUIT DE PROTECTION CONTRE D'EVENTUELLES SURCHAUFFES D'UNE RESISTANCE A CAPTEUR, CHAUFFEE EN FONCTION DE LA TEMPERATURE

(84) Benannte Vertragsstaaten:
**DE FR GB**

(30) Priorität: **23.09.1993 DE 4332412**

(43) Veröffentlichungstag der Anmeldung:
**10.07.1996 Patentblatt 1996/28**

(73) Patentinhaber: **SIEMENS AKTIENGESELLSCHAFT 80333 München (DE)**

(72) Erfinder:
• **SCHIFFERL, Ludwig D-93080 Pentling (DE)**
• **WILDGEN, Andreas D-93152 Nittendorf (DE)**

(56) Entgegenhaltungen:
**DE-A- 3 022 685**     **DE-A- 3 207 394**
**DE-A- 3 932 304**

• **PATENT ABSTRACTS OF JAPAN vol. 9, no. 329 (P-416) (2052) 24. Dezember 1985 & JP,A,60 154 116 (NIHON DENSHI) 13. August 1985**
• **PATENT ABSTRACTS OF JAPAN vol. 12, no. 48 (P-666) (2895) 13. Februar 1988 & JP,A,62 195 524 (JAPAN ELECTRONIC CONTROL) 28. August 1987**

**Beschreibung**

Die Erfindung betrifft ein Verfahren nach dem Oberbegriff von Patentanspruch 1 sowie eine Schaltungsanordnung zur Durchführung des Verfahrens nach dem Oberbegriff des Patentanspruchs 2.

Ein derartiges Verfahren ist aus der DE 32 07 394 Al bekannt. Dort wird der Sensorwiderstand jedoch nur während Freibrennvorgangen zur Beseitigung von Ablagerungen vor Überhitzung geschützt.

Eine entsprechende Schaltungsanordnung ist aus der A1 30 22 685 bekannt, wo eine genaue Einstellung einer bestimmten Drahttemperatur ebenfalls zum Freibrennen eines Luftmassenmessers, durch eine Schaltungsanordnung mit drei Brückenzweigen und zwei Differenzverstärkern vorgenommen wird, bei der eine maximal vorgegebene Sensortemperatur des Sensorwiderstands nicht überschritten wird.

Der Aufbau und die Wirkungsweise von thermischen Luftmassenmessern generell ist beispielsweise durch die DE 20 42 983 B2 bekannt. Anhand von Figur 3 soll nun kurz auf das bekannte Meßprinzip eingegangen werden. Diese Figur zeigt eine Schaltungsanordnung, die aus einer Meßbrücke mit einem ersten und zweiten Brückenzweig sowie einem Differenzverstärker mit zugehörigen Schaltungsmitteln besteht. Im ersten Brückenzweig befindet sich ein temperaturabhängiger Sensorwiderstand, wie ein Heißschichtwiderstand $Rh$, sowie ein damit in Reihe liegender Widerstand $R3$. Im zweiten Brückenzweig befinden sich ein temperaturabhängiger hochohmiger Widerstand $Rt$, der als schnell ansprechender Temperaturfühler dient und die Temperatur der Ansaugluft erfaßt. In Reihe damit ist ein Widerstand $R1$ und $R2$ geschaltet. Der Sensorwiderstand $Rh$ und der Widerstand $Rt$ sind in einem nicht gezeigten Ansaugtrakt einer Brennkraftmaschine angeordnet. Die Brücke wird von einer Spannungsquelle $Ub$ über einen ersten Transistor $T1$ am Punkt D mit Spannung versorgt. Der Punkt E der Brücke ist an Masse gelegt. Die Brückendiagonale der Brücke wird durch einen Abgriffspunkt A zwischen dem Widerstand $Rh$ und $R3$ sowie einem Abgriffspunkt C zwischen dem Widerstand $R1$ und $R2$ gebildet. Diese beiden Abgriffspunkte A und C sind an den Eingangsanschlüssen eines Differenzverstärkers OP1 angelegt, dessen Ausgang über einen Widerstand an die Basis eines weiteren Transistors $T2$ geführt ist, dessen Kollektor-Emitterstrecke einerseits an der Basis des ersten Transistors $T1$ und andererseits an Masse liegt. Die Größe der Widerstände $Rt$, $R1$ und $R2$ wird so gewählt, daß die Verlustleistung des temperaturabhängigen Widerstands $Rt$, die durch den ihn durchfließenden Brückenzweigstrom erzeugt wird, so gering ist, daß sich die Temperatur dieses Widerstandes $Rt$ praktisch nicht mit den Änderungen der Brückenspannung verändert, sondern stets der Temperatur der vorbeiströmenden Ansaugluft entspricht. Die Brücke soll sich im abgeglichenen Zustand befinden bei einer Temperatur, die in etwa der mittleren Lufttemperatur entspricht. Über die Spannungsquelle $Ub$ wird der temperaturabhängige Sensorwiderstand $Rh$ bis zu einem Wert aufgeheizt, bei dem die Brückendiagonalspannung $U_{AC}$ zu Null wird oder einen vorgegebenen Wert annimmt. Der Ausgang des Differenzverstarkers OP1 bestimmt dabei, welcher Strom in die Brückenschaltung fließt. Verändert sich infolge von Mengenänderungen der angesaugten Luft die Temperatur des Sensorwiderstandes $Rh$, so verändert sich die Spannung $U_{AC}$ an der Brückendiagonale und der Differenzverstärker OP1 regelt den Brückenspeisestrom über $T1$, $T2$ auf einen Wert, für den die Brücke wieder abgeglichen oder in vorgegebener Weise verstimmt ist. Die Ausgangsgröße des Differenzverstärkers OP1 oder der Strom durch $R3$ ist dann ein Maß für die angesaugte Luftmenge.

Übliche Luftmassenmesser haben normalerweise eine gewisse Trägheit, so daß Rückzündungen im Ansaugtrakt keinen schädlichen Einfluß auf den Sensorwiderstand haben. Aufgrund erhöhter technischer Anforderungen kommen jedoch immer mehr schnell reagierende Luftmassenmesser zum Einsatz. Treten nun hier Rückzündungen im Ansaugtrakt auf, so versucht der Differenzverstärker aufgrund einer Erwärmung des Temperaturfühlers $Rt$ die dadurch verstimmte Brücke nachzuregeln, was zu Überhitzungen und somit zu Schädigungen des Sensorwiderstandes $Rh$ führen kann.

Es ist Aufgabe der vorliegenden Erfindung, ein Verfahren und eine Schaltungsanordnung zu schaffen, wodurch es möglich ist, den Sensorwiderstand $Rh$ vor Schädigungen durch Überhitzungen zu schützen.

Diese Aufgabe wird erfindungsgemäß durch das Verfahren nach dem Patentanspruch 1 und die Schaltungsanordnung zur Durchführung des Verfahrens nach dem Anspruch 2 gelöst.

Durch die Maßnahmen nach der Erfindung wird erreicht, daß der Strom durch den Sensorwiderstand $Rh$ bei Rückzündungen im Ansaugtrakt so begrenzt wird, daß diese zu keinen schädlichen Auswirkungen auf den Sensorwiderstand führen.

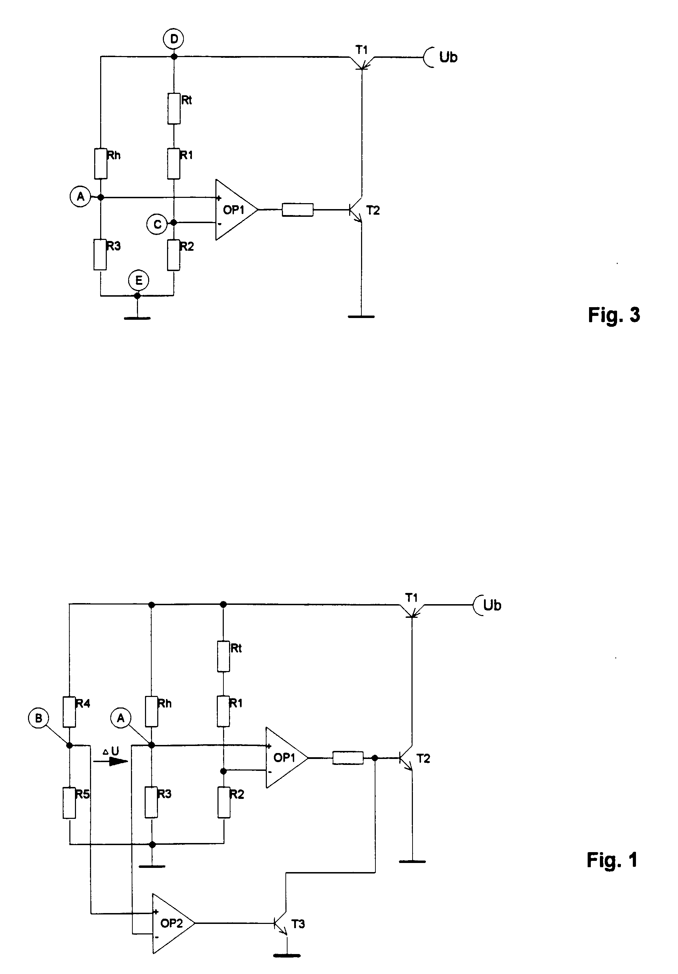

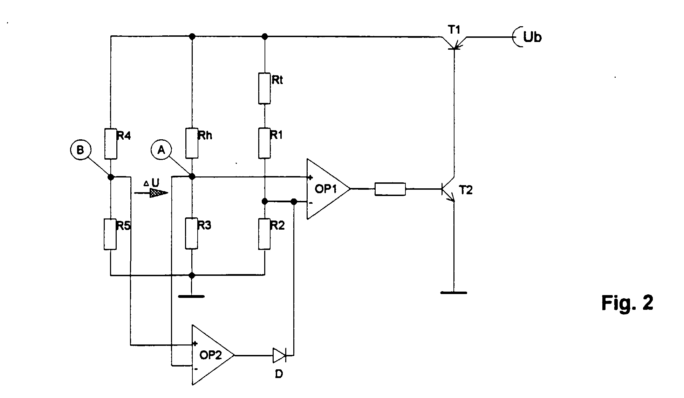

Die Erfindung wird nun anhand von zwei Ausführungsbeispielen anhand von Figur 1 und Figur 2 erläutert.

Es zeigen

Figur 1 eine erste Ausführungsform der Erfindung;

Figur 2 eine zweite Ausführungsform der Erfindung; und

Figur 3 eine Schaltungsanordnung nach dem Stand der Technik.

In den Figuren 1 und 2 sind die Schaltungselemente, die denen in Figur 3 gleich sind, mit den gleichen Bezugszeichen versehen. Wie ein Blick auf Figur 1 zeigt, ist dort der erste und zweite Brückenzweig, der Differenzverstärker OP1 sowie die Transistoren $T1$ und T2 mit der in Figur 3 gezeigten Anordnung identisch. Parallel zum ersten Brückenzweig ist nun ein dritter Brückenzweig geschaltet, der aus den Widerständen R4 und R5 besteht, zwischen denen ein Abgriff B gebildet wird. Zusammen mit dem Abgriff A des ersten Brückenzweigs wird der Abgriff B jeweils an die Eingangsanschlüsse eines zweiten Differenzverstärkers OP2 geführt, dessen Ausgang an die Basis eines weiteren Transistors T3 geführt ist. Der Emitter des Transistors T3 ist an Masse geschaltet. Der Kollektor von T3 ist mit der Basis des Transistors T2 verbunden.

Die Anordnung arbeitet wie folgt. Zuerst sei vorausgesetzt, daß das Widerstandsverhältnis R4/R5 dem Verhältnis Rh/R3 bei maximal zulässiger Absoluttemperatur Tmax von Rh entspricht, also

$$R4/R5 = Rh(Tmax)/R3$$

ist. Die Spannung ΔU zwischen den Abgriffen B und A wird demnach positiv, sobald der Sensorwiderstand Rh eine bestimmte Absoluttemperatur überschreitet. Diese Spannungsdifferenz wird durch den zweiten Differenzverstärker OP2 ausgewertet, wobei das Ausgangssignal des Differenzverstärkers OP2 auf die Basis des Transistors T3 so einwirkt, daß dieser den Basisstrom des Transistors T2 derart begrenzt, daß die zulässige Sensortemperatur nicht überschritten wird.

Die Schaltungsanordnung nach Figur 2 zeigt den gleichen Aufbau wie die Schaltungsanordnung nach Figur 1 mit der Ausnahme, daß der Ausgangsanschluß des Differenzverstärkers OP2 an einen invertierenden Eingang des ersten Differenzverstärkers OP1 über eine Diode D geführt ist. Bei einer auftretenden Spannungsdifferenz ΔU hebt das Ausgangssignal des Differenzverstärkers OP2 über die Diode D den invertierenden Eingang des Differenzverstärkers OP1 an, wodurch die Differenzeingangsspannung am Differenzverstärker OP1 kleiner wird und somit die gewünschte Strom- und Temperaturbegrenzung erzielt wird.

**Patentansprüche**

1. Verfahren zum Schutz eines beheizten temperaturabhängigen Sensorwiderstands vor Überhitzung, wobei

   - der Sensorwiderstand zum Messen der angesaugten Luftmasse im Ansaugtrakt einer Brennkraftmaschine in einem ersten Brückenzweig einer Brückenschaltung angeordnet ist,
   - die Brückenschaltung in einem zweiten Brückenzweig einen Widerstand als Lufttemperaturfühler aufweist, und
   - der Brückenstrom über erste Schaltungsmittel zur Konstanthaltung einer vorgegebenen Brückendiagonalspannung geregelt wird und als Maß für die angesaugte Luftmasse dient,

   **dadurch gekennzeichnet**, daß

   - die jeweiligen Spannungen am Mittelabgriff des ersten und eines dritten Brückenzweiges, der parallel zum ersten Brückenzweig liegt und im Verhältnis der Widerstände des ersten Brückenzweigs bei der zulässigen Maximaltemperatur des Sensorwiderstands abgestimmt ist, zweiten Schaltungsmitteln zugeführt werden, und
   - die zweiten Schaltungsmittel aufgrund dieser Spannungen über die ersten Schaltungsmittel eine Verringerung des Brückenstroms bewirken, falls bei plötzlicher starker Erwärmung des Widerstands des Lufttemperaturfühlers die zulässige Maximaltemperatur des Sensorwiderstands erreicht wird.

2. Schaltungsanordnung zum Messen der angesaugten Luftmasse im Ansaugtrakt einer Brennkraftmaschine mit

   - einem in einem ersten Brückenzweig einer Brückenschaltung angeordneten beheizten temperaturabhängigen Sensorwiderstand,
   - einem in einem zweiten Brückenzweig angeordneten Widerstand als Lufttemperaturfühler,
   - einem ersten Differenzverstärker und Schaltungsmitteln, die den Brückenstrom als Maß für die angesaugte Luftmasse zur Konstanthaltung einer vorgegebenen Brückendiagonalspannung regeln,
   - einem dritten Brückenzweig als Spannungsteiler, der parallel zum ersten Brückenzweig liegt und
   - einem zweiten Differenzverstärker, dessen Eingänge mit den Mittelabgriffen des ersten und dritten Brückenzweigs verbunden sind sowie weiteren Schaltungsmitteln,

   **dadurch gekennzeichnet,** daß

   - der dritte Brückenzweig im Verhältnis der Widerstände des ersten Brückenzweigs bei der zulässigen Maximaltemperatur des Sensorwiderstands abgestimmt ist, und
   - die weiteren Schaltungsmittel aufgrund der Eingangsspannungen des zweiten Differenzverstärkers eine Verringerung des Brückenstroms bewirken, falls bei plötzlicher starker Erwärmung des Widerstands des Lufttemperaturfühlers die zulässige Maximaltemperatur des Sensorwiderstands erreicht wird.

3. Schaltungsanordnung nach Anspruch 2,
   **dadurch gekennzeichnet**, daß die weiteren Schaltungsmittel aus einem Transistor (T3) bestehen, dessen Steueranschluß (Basis) mit dem Ausgangsanschluß des zweiten Differenzverstärkers (OP2) verbunden ist und dessen Kollektor-Emitterstrecke mit einem den Strom der Brückenschaltung regelnden Schaltungselement (T2) verbunden ist.

4. Schaltungsanordnung nach Anspruch 2, **dadurch gekennzeichnet**, daß die weiteren Schaltungsmittel aus einer Verbindung des Ausgangs des zweiten Differenzverstärkers (OP2) mit einem Eingang des ersten Differenzverstärkers (OP1) bestehen (Fig. 2).

5. Schaltungsanordnung nach Anspruch 4, **dadurch gekennzeichnet**, daß in die genannte Verbindung ein die Stromrichtung bestimmendes Schaltungselement (D) geschaltet ist.

**Claims**

1. Method for protecting a heated temperature-dependent sensor resistor against overheating, it being the case that

   - for the purpose of measuring the inlet air mass in the inlet tract of an internal combustion engine the sensor resistor is arranged in a first bridge arm of a bridge circuit,
   - in a second bridge arm the bridge circuit has a resistor as air temperature detector, and
   - the bridge current is controlled via first circuit means for keeping a prescribed bridge diagonal voltage constant and serves as a measure of the inlet air mass,

   characterized in that

   - the respective voltages at the centre tap of the first and of a third bridge arm, which is in parallel with the first bridge arm and is tuned in the ratio of the resistors of the first bridge arm at the maximum permissible temperature of the sensor resistor, are fed to second circuit means, and
   - owing to these voltages the second circuit means effects a reduction in the bridge current via the first circuit means if the permissible maximum temperature of the sensor resistor is reached in the event of sudden strong heating of the resistor of the air temperature detector.

2. Circuit arrangement for measuring the inlet air mass in the inlet tract of an internal combustion engine, having

   - a heated temperature-dependent sensor resistor arranged in a first bridge arm of a bridge circuit,
   - as air temperature detector, a resistor arranged in a second bridge arm,
   - a first differential amplifier and circuit means which control the bridge current as a measure of the inlet air mass for the purpose of keeping constant a prescribed bridge diagonal voltage,
   - as voltage divider, a third bridge arm, which is connected in parallel with the first bridge arm, and
   - a second differential amplifier, whose inputs are connected to the centre taps of the first and third bridge arms, as well as further circuit means,

   characterized in that

   - the third bridge arm is tuned in the ratio of the resistors of the first bridge arm in the case of the maximum permissible temperature of the sensor resistor, and
   - owing to the input voltages of the second differential amplifier the further circuit means effects a reduction in the bridge current if the permissible maximum temperature of the sensor resistor is reached in the event of sudden strong heating of the resistor of the air temperature detector.

3. Circuit arrangement according to Claim 2, characterized in that the further circuit means comprise a transistor (T3) whose gate terminal (base) is connected to the output terminal of the second differential amplifier (OP2), and whose collector-emitter path is connected to a circuit element (T2) controlling the current of the bridge circuit.

4. Circuit arrangement according to Claim 2, characterized in that the further circuit means comprise a connection of the output of the second differential amplifier (OP2) to an input of the first differential amplifier (OP1) (Figure 2).

5. Circuit arrangement according to Claim 4, characterized in that a circuit element (D) determining the current direction is connected into the said connection.

**Revendications**

1. Procédé permettant de protéger d'une surchauffe une résistance de capteur variable avec la température, qui est chauffée, selon lequel

   - la résistance de capteur servant à mesurer le débit d'air admis, dans la ligne d'admission d'un moteur à combustion interne, est disposée dans une première branche de pont d'un circuit en pont,

- le circuit en pont comprend, dans une deuxième branche de pont, une résistance servant de sonde de température d'air et

- le courant de pont est réglé à l'aide de premiers moyens de commutation en vue de maintenir constante une tension de diagonale de pont préfixée et sert de mesure correspondant au débit d'air admis,

    caractérisé en ce que

- les tensions respectives sur la prise intermédiaire de la première branche de pont et sur la prise intermédiaire d'une troisième branche de pont, qui est disposée parallèlement à la première branche de pont et est équilibrée dans le rapport des résistances de la première branche de pont pour la température maximale admissible de la résistance de capteur, sont appliquées à des seconds moyens de commutation et

- en fonction de ces tensions, les seconds moyens de commutation créent, par l'intermédiaire des premiers moyens de commutation, une réduction du courant de pont dans le cas où, lors d'un échauffement intense brusque de la résistance de la sonde de température d'air, la température maximale admissible de la résistance de capteur est atteinte.

2. Agencement de circuit pour la mesure du débit d'air admis, dans la ligne d'admission d'un moteur à combustion interne, comprenant

- une résistance de capteur variable avec la température, qui est chauffée et est disposée dans une première branche de pont d'un circuit en pont,

- une résistance disposée dans une deuxième branche de pont et servant de sonde de température d'air,

- un premier amplificateur différentiel et des moyens de commutation qui règlent le courant de pont en tant que mesure correspondant au débit d'air admis, en vue de maintenir constante une tension de diagonale de pont préfixée,

- une troisième branche de pont servant de diviseur de tension et disposée parallèlement à la première branche de pont et

- un second amplificateur différentiel dont les entrées sont reliées aux prises intermédiaires de la première et de la troisième branches de pont, ainsi que des seconds moyens de commutation,

    caractérisé en ce que

- la troisième branche de pont est équilibrée dans le rapport des résistances de la première branche de pont pour la température maximale admissible de la résistance de capteur et

- sous l'effet des tensions d'entrée du second amplificateur différentiel, les seconds moyens de commutation créent une réduction du courant de pont dans le cas où, lors d'un échauffement intense brusque de la résistance de la sonde de température d'air, la température maximale admissible de la résistance de capteur est atteinte.

3. Agencement de circuit selon la revendication 2, caractérisé en ce que les seconds moyens de commutation sont constitués d'un transistor (T3) dont la borne de commande (base) est reliée à la borne de sortie du second amplificateur différentiel (OP2) et dont le segment collecteur-émetteur est relié à un élément de commutation (T2) réglant le courant du circuit en pont.

4. Agencement de circuit selon la revendication 2, caractérisé en ce que les seconds moyens de commutation sont constitués par une liaison de la sortie du second amplificateur différentiel (OP2) avec l'entrée du premier amplificateur différentiel (OP1) (figure 2).

5. Agencement de circuit selon la revendication 4, caractérisé en ce qu'un élément de commutation (D) déterminant le sens du courant est monté dans la susdite liaison.

Fig. 3

Fig. 1

6

**Fig. 2**